Europäisches Patentamt

(19) European Patent Office

Office européen des brevets

(11) Publication number: **0 426 091 B1**

## EUROPEAN PATENT SPECIFICATION

(45) Date of publication of patent specification: **08.06.94**   (51) Int. Cl.⁵: **G01C  17/38**

(21) Application number: **90120749.8**

(22) Date of filing: **29.10.90**

(54) **Direction finding apparatus.**

(30) Priority: **02.11.89 JP 287003/89**

(43) Date of publication of application:
**08.05.91 Bulletin  91/19**

(45) Publication of the grant of the patent:
**08.06.94 Bulletin  94/23**

(84) Designated Contracting States:
**DE FR GB**

(56) References cited:
**WO-A-88/05153**
**GB-A- 2 141 551**

**Patent Abstracts of Japan, vol. 12, no. 492
(P-804)(3339), 22 December 1988**

(73) Proprietor: **MATSUSHITA ELECTRIC INDUSTRI-
AL CO., LTD.**
**1006, Oaza Kadoma**
**Kadoma-shi, Osaka-fu, 571(JP)**

(72) Inventor: **Ihara, Yasuhiro**
**30-23, Miyuki-Higashimachi**
**Neyagawa City, 572(JP)**
Inventor: **Ueyama, Yoshiki**
**5-610, Hamadera Showa-cho**
**Sakai City, 592(JP)**
Inventor: **Yamashita, Mitsuhiro**
**Koushin-biru 301,**
**13-3, Tenma 2-chome**
**Kita-ku, Osaka City, 590(JP)**

(74) Representative: **Dr. Elisabeth Jung Dr. Jürgen
Schirdewahn Dipl.-Ing. Claus Gernhardt
Postfach 40 14 68
D-80714 München (DE)**

## Description

## FIELD OF THE INVENTION

The present invention relates generally to a direction finding apparatus, and more particularly to a direction finding apparatus to be mounted on a vehicle in which an error of direction finding due to a variation of magnetization of the vehicle is corrected during running of the vehicle.

## DESCRIPTION OF THE RELATED ART

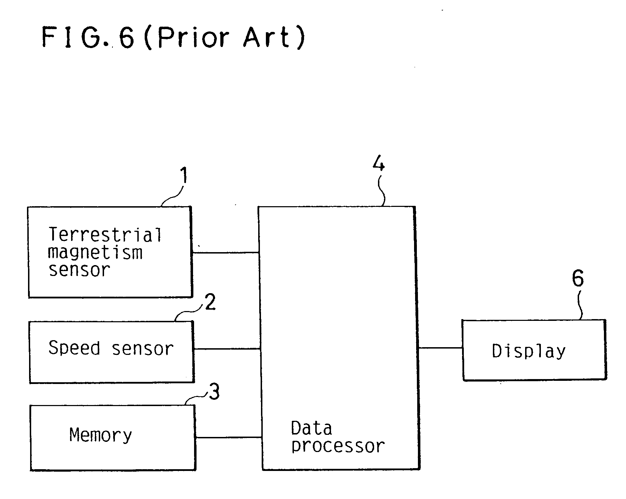

FIG.6 is the block diagram of a navigation system of a vehicle which is disclosed in the Japanese published unexamined patent application Sho 63-204112. Referring to FIG.6, a terrestrial magnetism is detected by a terrestrial magnetism sensor 1, and a direction signal representing the course of a vehicle is output. The direction signal is output by two outputs of voltages which represent the respective components of X-Y coordinates comprising an ordinate corresponding to a front-back direction of the vehicle and an abscissa corresponding to a left-right direction which is perpendicular to the front-back direction.

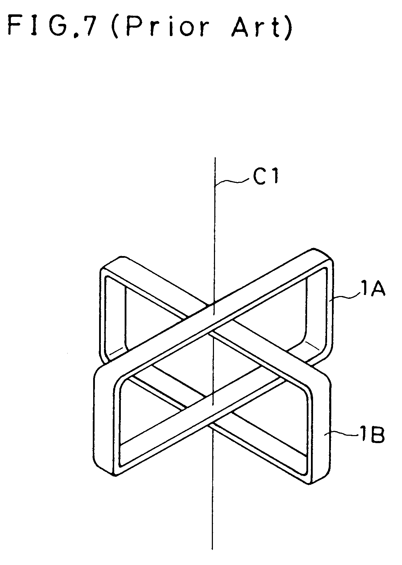

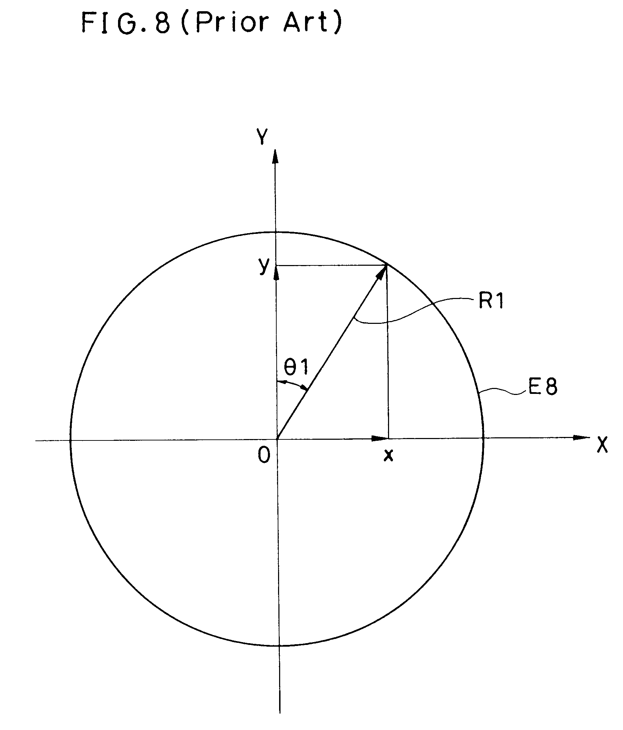

FIG.7 is a perspective view of an example of a terrestrial magnetism sensor 1 which is comprised of two coils 1A and 1B which are orthogonally aligned to each other. The terrestrial magnetism sensor 1 is mounted on the vehicle so that the axis of one of two coils is parallel to the front-back direction, and an axis C1 passing two intersections of the coils 1A and 1B is made to be perpendicular to the ground as presently known in the art. The terrestrial magnetism sensor 1 detects the intensity of the horizontal component of the terrestrial magnetism. Assuming that the vehicle is not magnetized, two output voltages x and y are shown on the X-Y coordinates as shown in FIG.8. Referring to FIG.8, an arrow R1 represents the direction of the terrestrial magnetism and points the "magnetism north", and the length of the arrow R1 represents the intensity. An angle $\theta 1$ represents the course of the vehicle. In this status, the vehicle is turned at least one turn on the ground. Consequently, the arrow R1 is rotated on the X-Y coordinates at the revolution axis of the original point "0", and the tip of the arrow R1 draws a circle E8. The circle E8 is named as an "output circle" by the inventor since it is drawn on the basis of the output of the terrestrial magnetism sensor 1. The "output circle" is called a "turning circle" in the prior art.

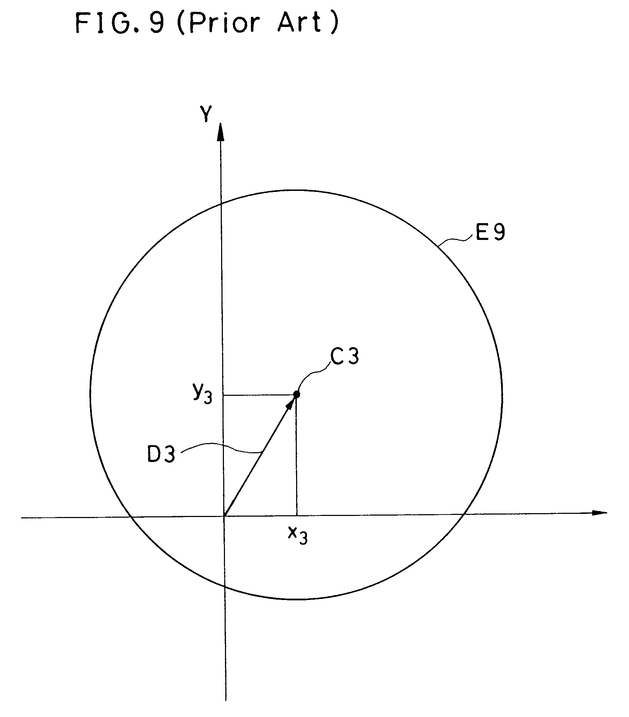

In an actual vehicle, the body and engine made mainly of steel is magnetized in a certain degree, and the magnetism affects the detected value of the terrestrial magnetism sensor 1. The effect is represented by shift of the output circle on the X-Y coordinates as shown in FIG.9. Referring to FIG.9, the center C3 of an output circle E9 is shifted to the coordinates $(x_3, y_3)$. The shift of the center of the output circle represents that the vehicle has the magnetism which has a value $x_3$ in X component and a value $y_3$ in Y component, and the direction thereof is pointed by an arrow D3.

Where the vehicle passes a place on which a high intensity magnetic field is generated by a large current in rails of electric car or high voltage electric transmission lines such as at a "railroad crossing", the status of the magnetization of the vehicle is varied. The once-induced variation of the status of the magnetization does not return to the original status even after passing the place, but several days are required for restoration to the original status as be familiar to one skilled in the art. The above-mentioned magnetic field due to the electric lines is called as "foreign magnetic field" by the inventor.

Referring to FIG. 6, a speed sensor 2 detects a revolution of a wheel of the vehicle, and thereby data of a vehicle speed and a distance of running of the vehicle are output. Map data representing a road network and the status of a road is memorized in a memory 3. The direction signal of the terrestrial magnetism sensor 1, the data of the vehicle speed and travel distance and the map data of the memory 3 are applied to a data processor 4 and are calculated, and the position of the vehicle is determined by dead-reckoning and is displayed on a display 6.

According to the prior art, the position and the direction of the road having the foreign magnetic field are memorized in the memory 3 with the map data of the road network in advance. When the vehicle has passed the place having the foreign magnetic field, the position of the center of the output circle is corrected on the basis of both the detected data of the terrestrial magnetism sensor 1 and the data memorized in the memory 3 designating the direction of the road. Then the course of the vehicle is determined on the basis of the corrected output circle.

In the direction finding apparatus in the prior art as mentioned above, the data of the road and the direction thereof which affect the magnetization of the vehicle have been required to be memorized in the memory 3 in advance. Since such operation requires a large scale of beforehand investigation, there is a difficulty in collecting the data of all roads for the road map.

Moreover, in order to determine the new center of the output circle after variation of the magnetization of the vehicle, the output data of the terrestrial magnetism sensor and the radius of the output circle have been utilized. The output circle which is used in operation of the navigation system of the prior art is formed at start of the vehicle on the basis of the terrestrial magnetism at the starting position. Since the intensity of the terrestrial magnetism varies depending on the position, the radius of the output circle is also varied depending on the position. Consequently, if the output circle at the starting position is used for determining the direction at the place which is apart from the starting position, occurrence of an error cannot be eliminated.

In JP-A-63204112 (& Patent Abstracts of Japan, vol. 12, no. 492 (p-804)(3339) Dec. 22, 1988), a navigation system is described comprising an earth magnetism sensor, a car speed sensor, a memory medium, a main body and a judge means. When a quantity of magnetism changes at a position such as a railroad crossing, a high-level road or a transmission line, the before-and-behind direction of said position are stored in the recording medium along with a map and a peripheral state. The present position and running course of a vehicle are calculated and the error of the earth magnetism sensor from the data of the position where the quantity of magnetization has changed are estimated. The data from the earth magnetism sensor and the data of said position are compared to correct the error of the earth magnetism sensor.

## OBJECT AND SUMMARY OF THE INVENTION

An object of the present invention is to provide a direction finding apparatus of which an error in direction finding caused by magnetization of a vehicle is corrected.

The direction finding apparatus in accordance with the present invention is characterized by the features of claim 1.

While the novel features of the invention are set forth particularly in the claims, the invention, both as to organization and content, will be better understood and appreciated, along with other objects and features thereof, from the following detailed description taken in conjunction with the drawings.

## BRIEF DESCRIPTION OF THE DRAWINGS

FIG.1 is a block diagram of an embodiment of a direction finding apparatus in accordance with the present invention;
FIG.2 is a graph of an output circle in the embodiment;
FIG.3 is a graph of an output circle on which a loop due to a foreign magnetic field is superimposed;
FIG.4 is a graph of the output circle for elucidating shift of the center thereof;

FIG.5 is a flow chart of operation of the embodiment;
FIG.6 is the block diagram of the navigation system of a vehicle in the prior art;
FIG.7 is the perspective view of the terrestrial magnetism sensor;
FIG.8 is the graph of the output circle;
FIG.9 is the output circle having the shifted center thereof in the prior art.

It will be recognized that some or all of the Figures are schematic representations for purposes of illustration and do not necessarily depict the actual relative sizes or locations of the elements shown.

## DESCRIPTION OF THE PREFERRED EMBODIMENTS

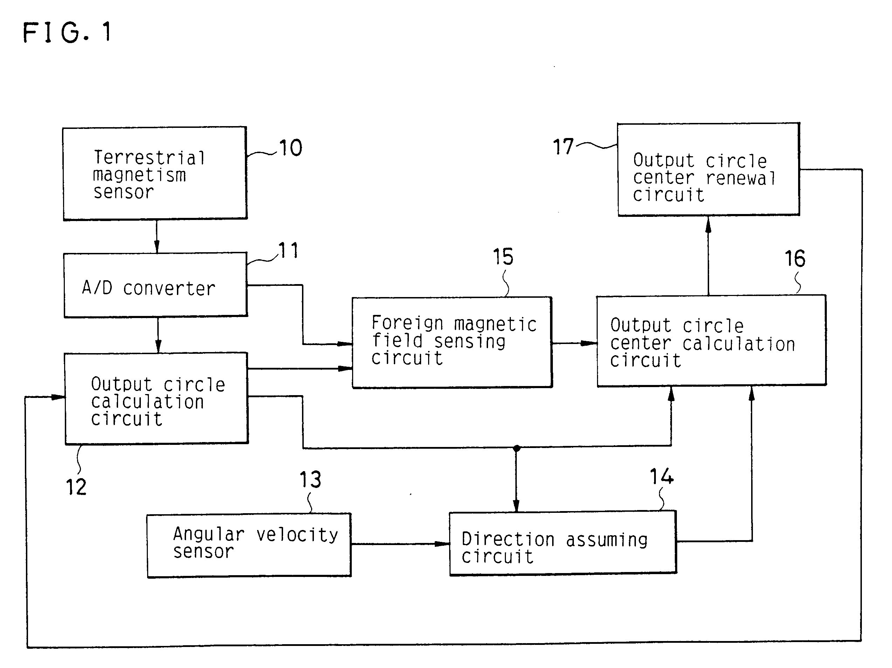

FIG.1 is a block diagram of an embodiment of a direction finding apparatus in accordance with the present invention. Referring to FIG.1, a terrestrial magnetism sensor 1 which is identical with that shown in FIG.7 comprises two coils 1A and 1B which are orthogonally positioned to each other. The terrestrial magnetism sensor 1 is mounted on a vehicle so that a first coil of the sensor is provided on a first vertical plane which is parallel with a front-back axis of the vehicle, said vertical plane being vertical to a horizontal axis of the vehicle, and a second coil of the sensor is provided on a second vertical plane which is perpendicular to said front-back axis, said second vertical plane being vertical to said horizontal axis, and said first vertical plane and said second vertical plane intersect each other at the vertical axis C1 of the vehicle. That is, the mutual intersections of two coils 1A and 1B is perpendicular to the ground when the vehicle runs normally on a horizontal road, and horizontal axis of the first coil is parallel to the front-back direction of the vehicle. The direction signal which is output from the terrestrial magnetism sensor 1 is applied to an A/D converter 11 (FIG. 1) and is converted to a digital signal. The digital signal is applied to an output circle calculation circuit 12 and a foreign magnetic field sensing circuit 15. Then, the vehicle is turned on the ground at least one turn by suitable way, e.g by being driven on a small circle, and hence an "output circle" is generated on an X-Y coordinates in a manner which is familiar to one skilled in the art. The generated output circle is memorized in a memory which is comprised in the output circle calculation circuit 12.

An angular velocity sensor 13 as course finding means detects an angular velocity when the vehicle is changing the course. The output of the angular velocity sensor 13 is applied to a direction assuming circuit 14. In the direction assuming circuit 14, the direction of the vehicle at the present position is assumed with reference to the direction at a past position which is computed from the output circle calculation circuit 12, and a new distance data is output. The output of the distance assuming circuit 14 is applied to an output circle center calculation circuit 16. The output of the A/D converter 11 is also applied to a foreign magnetic field sensing circuit 15.

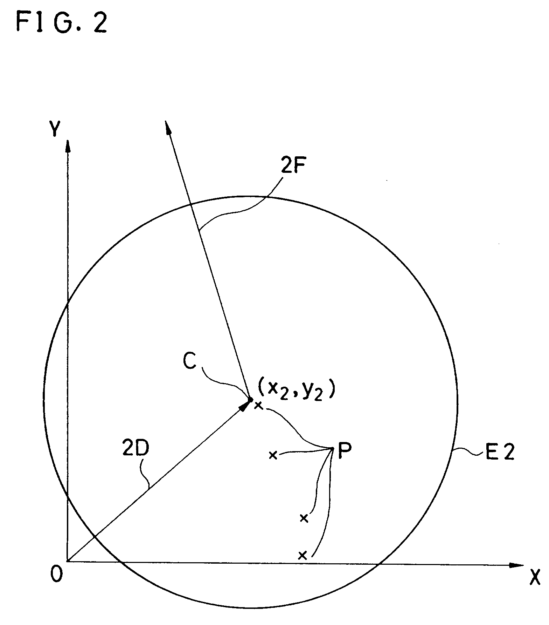

Operation of the embodiment is elucidated hereafter with reference to FIGs. 2, 3, 4 and 5.

FIG.2 is a graph of an output circle which is measured by passing a vehicle provided with the terrestrial magnetism sensor 1 on a railroad crossing having a foreign magnetic field, which is caused by a large current flowing through the railroad and electric transmission lines in proximity to the railroad crossing. Referring to FIG.2, an output circle E2 shows an output circle of the state before passing the railroad crossing, and the center C is shifted from the point of origin 0 to a position $(x_2, y_2)$ of the tip of an arrow 2D by magnetization of the vehicle. The direction of the foreign magnetic field is shown by an arrow 2F. When the vehicle passes in the foreign magnetic field, status of the magnetization of the vehicle, namely the direction and intensity of the magnetization are affected by the foreign magnetic field and are varied thereby. The variation of the magnetization of the vehicle does not return to the original status very quickly after passing in the foreign magnetic field, but remains for several days by gradually varying to the original status.

When the magnetization of the vehicle is varied by the foreign magnetic field as mentioned above, the center coordinates $(x_2, y_2)$ of the output circle E2 is shifted on the X-Y coordinates. It was clarified by an actual measurement by the inventor that the moving direction of the center of the output circle E2 was inverse to that of the foreign magnetic field with respect to the center coordinates, and a moved center exists on a prolonged line of the arrow 2F as marked by crosses P. In the embodiment, the result which is obtained by the above-mentioned measurement is utilized.

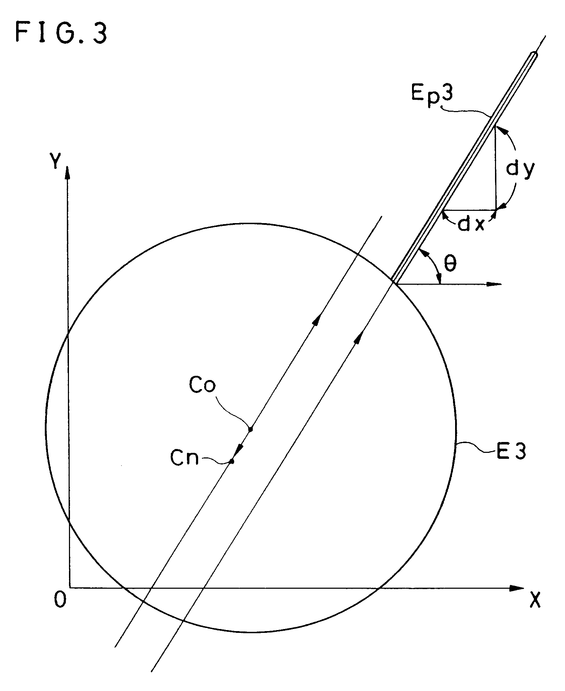

FIG.3 is a graph of an output circle which is partly distorted by the foreign magnetic field. When the vehicle is magnetized in a direction by passing in the foreign magnetic field, it is considered that a part of the output circle E3 protrudes to the direction of the magnetization as shown by a protrusion Ep3. The distortion results in a protruding outward from the output circle E3 (shown in FIG. 3) or in depression inward thereof (not shown) in compliance with the direction of the foreign magnetic field. The value and direction of such distortion of the output circle is computed by comparing the direction signal of the output circle prior to entering the foreign magnetic field with the direction signal of the terrestrial magnetism sensor 1 after passing the foreign magnetic field.

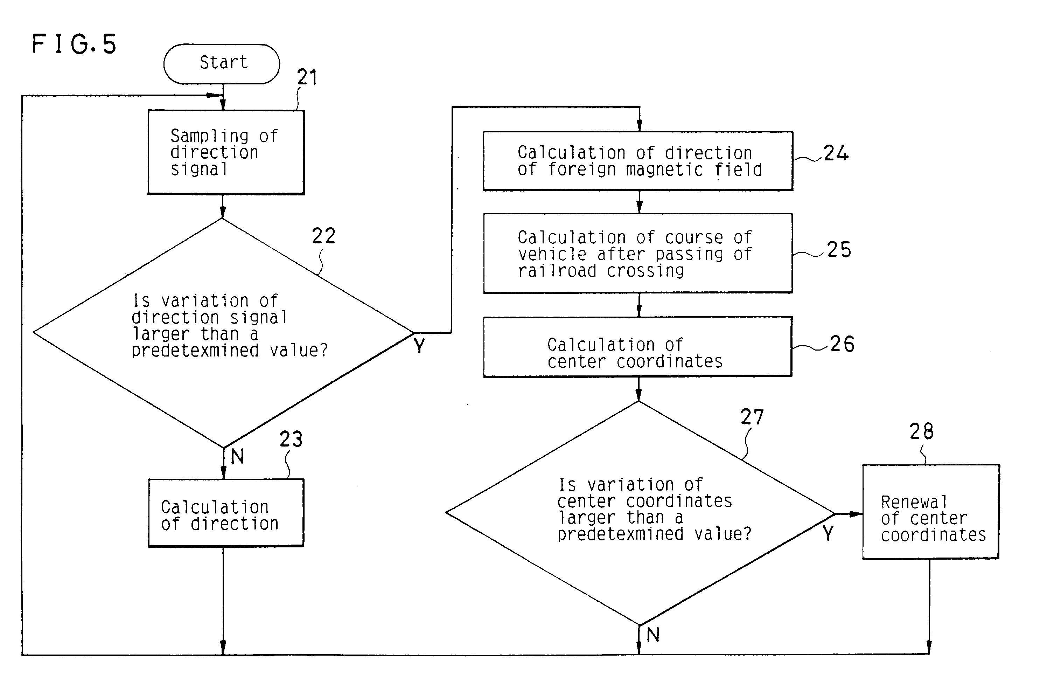

Hereafter, the operation of the embodiment is elucidated with reference to the flow chart shown in FIG.5. The direction signal of the terrestrial magnetism sensor 1 is sampled with a predetermined periodic time (1.0 second, for example) for A/D converting (Step 21). The sampled and digitalized direction signal together with the data of the output circle memorized in the output circle calculation circuit 12 are applied to the foreign magnetic field sensing circuit 15. In the foreign magnetic field sensing circuit 15, the sampled direction signal is compared with the direction signal of the output circle memorized in the output circle calculation circuit 12. When the difference between them (variation of detected value of the terrestrial magnetism sensor 1) is larger than 10% of the intensity of the direction signal corresponding to the radius of the output circle, for example, it is determined that the magnetization of the vehicle is varied by the foreign magnetic field (Step 22).

Subsequently, the direction of the foreign magnetic field is sensed as described hereafter (Step 22). When the variation of the direction signal per the unit time of the sampling periodic time becomes the maximum value during passing the railroad crossing, an X direction variation (dx) and a Y direction variation (dy) of the outputs from the terrestrial magnetism sensor 1 is detected. Then, the direction $\theta$ of the foreign magnetic field with respect to the abscissa X is given by

$$\theta = \arctan (dy/dx) \qquad (1).$$

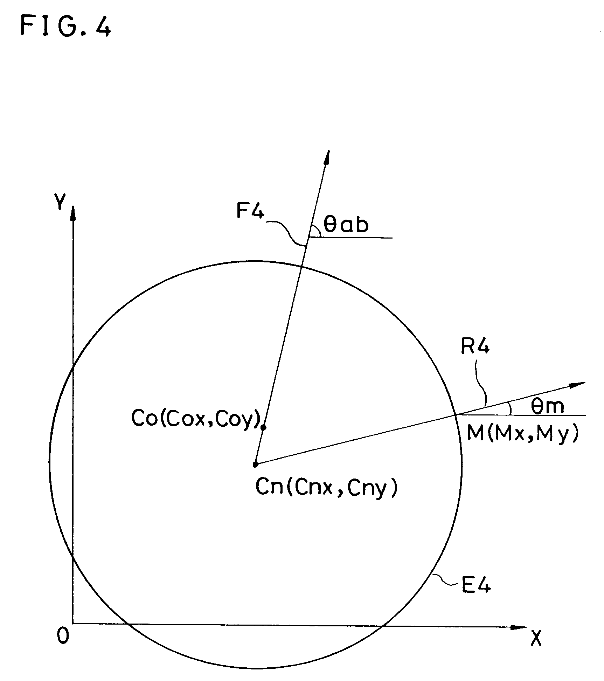

FIG.4 is a graph of an output circle E4 after passing the railroad crossing. Referring to FIG.4, the direction of the foreign magnetic field is shown by an arrow F4, and the angle $\theta ab$ between the arrow F4 and the abscissa X is given by the equation (1). The course of the vehicle after passing the railroad crossing shown by an arrow R4 is computed as follows. The vehicle is first driven for a predetermined distance (50 -- 100 m, for example) after passing of the railroad crossing, and the variation of the course of the vehicle is detected by the angular velocity sensor 13. Then, the detected angular velocity value is applied to the direction assuming circuit 14, and a corrected course R4 is determined by correcting the course before passing the railroad crossing which is inputted from the output circle calculation circuit 12 (Step 25). The corrected course R4 is applied to the output center calculation circuit 16.

Subsequently, the angle $\theta m$ between the arrow R4 and the abscissa X is given by the following equation (2):

$\theta_m$ = arctan ((My - Cny)/(Mx - Cnx))　　(2).

Therein, the coordinate Cn (Cnx, Cny) represents the new center of the output circle E4 which is moved to a new position on the X-Y coordinates, and the coordinate M (Mx, My) represents a position on the output circle E4 which is obtained on the basis of the direction signal of the terrestrial magnetism sensor 1 after passing of the railroad crossing.

According to the actual measurement described with reference to FIG.2, it is assumed that the center (Cn) of the output circle after passing the railroad crossing is on the prolonged line of the arrow F4 which shows the direction of foreign magnetic field, at a position in inverse direction to the direction of the foreign magnetic field with respect to the center (Co). Therefore, the new center coordinate Cn (Cnx, Cny) is obtained by evaluating an intersection of the straight line of the arrow F4 and the straight line of the arrow R4. The straight line shown by the arrow F4 is given by

y = x•tan($\theta$ab) + Coy - Cox•tan($\theta$ab)　　(3).

The straight line shown by the arrow R4 is given by

y = x•tan($\theta$) + My - Mx•tan($\theta$)　　(4).

The components Cnx and Cny of the intersection of both the straight lines are given by equations (5) and (6) by using the equations (3) and (4) as follows:

Cnx = (My - Mx • tan($\theta$) - Coy + Cox • tan($\theta$ab)) /(tan($\theta$ab) - tan($\theta$))　　(5), and

Cny = (tan($\theta$ab) • (My - Mx • tan($\theta$)) - tan($\theta$) • - (Coy - Cox • tan($\theta$ab))) /(tan($\theta$ab) - tan($\theta$))　　(6).

Consequently, the center coordinate Cn (Cnx, Cny) of the output circle corresponding to the variation of the magnetization of the vehicle after passing the railroad crossing is obtained by the abovementioned operation (Step 26).

Subsequently, it is examined that the difference between the new center coordinate (Cn) and the former center coordinate (Co) is larger than a predetermined value (20% of the direction signal corresponding to the radius of the output circle, for example) (Step 27). Then, when the difference is larger than the predetermined value, the center coordinate (Co) of the output circle memorized in the output circle calculation circuit 12 is replaced with the new center coordinate (Cn) (Step 28).

In the embodiment, the assumed course of the vehicle after passing of the railroad crossing is computed on the basis of the detected value of the angular velocity sensor 13. The assumed course can be computed on the basis of the received signal of the Global Positioning System (wherein a wireless signal is transmitted by a satellite, and a vehicle can detect its position by receiving the wireless signal) or a sign post (wherein a wireless signal is transmitted from apparatuses placed at sides of the road, and a vehicle can detect its direction of the road by receiving the wireless signal).

Although the invention has been described in its preferred form with a certain degree of particularity, it is understood that the present disclosure of the preferred form has been changed in the details of construction and the combination and arrangement of parts may be resorted to without departing from the scope of the invention as claimed.

## Claims

1. A direction finding apparatus comprising:

    a terrestrial magnetism sensor (10) having two sensor elements (1A,1B) arranged orthogonally to each other and vertically for detecting a terrestrial magnetism, mounted on a vehicle,

    output circle calculation means (12) for generating data of an output circle (E2,E3) computed on the basis of the outputs of said two sensor elements of said terrestrial magnetism sensor (10) on an X-Y coordinate at a 360° turning of said vehicle on the ground,

    foreign magnetic field sensing means (15) for finding direction of a foreign magnetic field (2F) which is caused by a current flowing through electric transmission lines,

    course finding means (13) comprising an angular velocity sensor for detecting a 360° turn of said vehicle for finding course of said vehicle after passing through said foreign magnetic field, by computing the output of said angular velocity sensor and the data of said former output circle before passing through said foreign magnetic field (2F),

    direction assuming means (14) for determining an assumed direction on the basis of one member selected from the group consisting of the detected data of said course finding means and the data of said former output circle before passing through said foreign magnetic field, the direction of a road in map data, the data of Global Positioning System and the direction of a road in the data which is transmitted by a sign post,

    output circle center calculation means (16) for evaluating a distance deviation of a new center of said output circle after passing through said foreign magnetic field (2F) from the former center before passing through said foreign magnetic field on the basis of said direction of said foreign magnetic field and the direction detected by said direction assuming means, and

output circle center renewal means (17) for changing the position of said former center to the new center computed by said output circle center calculation means.

2. A direction finding apparatus in accordance with claim 1, wherein said output circle center calculation means (16) computes an intersection (Cn) of a line (F4) representing the direction of said foreign magnetic field and a line representing said assumed direction by said direction assuming means.

**Patentansprüche**

1. Vorrichtung zur Bestimmung einer Richtung, die folgende Elemente aufweist:

einen Erdmagnetfeldsensor (10) mit zwei Sensorelementen (1A, 1B), die orthogonal zueinander und vertikal angeordnet an einem Fahrzeug angeordnet sind, um ein Erdmagnetfeld wahrzunehmen bzw. zu bestimmen,

eine Ausgangskreisberechnungseinrichtung (12) zum Erzeugen von Daten eines Ausgangskreises (E2, E3), der auf der Basis der Ausgabewerte der zwei Sensorelemente des Erdmagnetfeldsensors (10) in einem X-Y Koordinatensystem bei einer 360°-Drehung des Fahrzeuges auf dem Untergrund berechnet wird,

eine Einrichtung (15) zum Wahrnehmen bzw. Bestimmen eines äußeren Magnetfeldes zum Bestimmen einer Richtung eines äußeren Magnetfeldes (2F), welche durch einen Strom bewirkt wird, der durch elektrische Übertragungsleitungen fließt,

eine Fahrtrichtungsbestimmungseinrichtung (13), die einen Winkelgeschwindigkeitssensor zum Bestimmen einer 360°-Drehung des Fahrzeugs aufweist, um eine Fahrtrichtung des Fahrzeugs nach dem Durchqueren des äußeren Magnetfeldes zu bestimmen, indem die Ausgangswerte des Winkelgeschwindigkeitssensors und die Daten des vorherigen Ausgangskreises vor dem Durchqueren des äußeren Magnetfeldes (2F) berechnet werden,

eine Einrichtung (14) zum Annehmen bzw. Einschätzen einer Richtung zum Bestimmen einer angenommenen Richtung auf Basis eines aus derjenigen Gruppe entnommenen Mitglieds, die die wahrgenommenen bzw. festgestellten Daten der fahrtrichtungsbestimmenden Einrichtung und die Daten des vorherigen Ausgangskreises vor dem Durchqueren des äußeren Magnetfeldes, die Richtung einer Straße gemäß Daten einer Karte, die Daten eines globalen Positions- bzw. Positionierungssystems und die Richtung einer Straße gemäß den Daten, welche über ein Zeichenübermittlungssystem übermittelt werden, umfaßt,

eine Einrichtung (16) zum Berechnen eines Ausgangskreismittelpunktes zum Einschätzen einer Abstandsabweichung eines neuen Mittelpunktes des Ausgangskreises nach dem Durchqueren des äußeren magnetischen Feldes (2F) von dem vorherigen Mittelpunkt vor dem Durchqueren des äußeren magnetischen Feldes auf der Basis der Richtung des äußeren magnetischen Feldes und der Richtung, die durch die Einrichtung zum Einschätzen einer Richtung wahrgenommen bzw. festgestellt wird, und

eine Einrichtung (17) zum Erneuern bzw. Neufestsetzen eines Ausgangskreismittelpunktes zum Ändern der Position des vorherigen Mittelpunktes zu dem neuen Mittelpunkt, der durch die Einrichtung zum Berechnen des Ausgangskreismittelpunktes berechnet worden ist.

2. Eine Vorrichtung zum Bestimmen einer Richtung nach Anspruch 1, wobei die Einrichtung (16) zum Berechnen des Ausgangskreismittelpunktes einen Schnittpunkt (Cn) einer Linie (F4), die die Richtung des äußeren Magnetfeldes wiedergibt, und einer Linie, die die angenommene Richtung wiedergibt bzw. darstellt, mittels der Einrichtung zum Einschätzen einer Richtung berechnet.

**Revendications**

1. Dispositif de détermination d'azimut comprenant :

un capteur de magnétisme terrestre (10) comportant deux éléments de capteur (1A, 1B) disposés orthogonalement l'un par rapport à l'autre et verticalement pour détecter un magnétisme terrestre, monté sur un véhicule,

un moyen de calcul de cercle de sortie (12) pour produire des données d'un cercle de sortie (E2, E3) calculé sur la base des sorties des deux éléments de capteur dudit capteur de magnétisme terrestre (10) sur des coordonnées X-Y après avoir tourné de 360° ledit véhicule sur le sol,

un moyen de détection de champ magnétique étranger (15) pour déterminer l'azimut d'un champ magnétique étranger (2F) qui est provoqué par un courant circulant dans des lignes de transmission électrique,

un moyen de détection de cap (13) comprenant un capteur de vitesse angulaire pour détecter une rotation de 360° dudit véhicule pour déterminer le cap du véhicule après être passé à travers ledit champ magnétique étranger, en calculant la sortie dudit détecteur de vitesse angulaire et les données dudit cercle de sortie précédent avant de passer à travers le champ magnétique étranger (2F),

un moyen d'estimation d'azimut (14) pour déterminer un azimut supposé sur la base d'un élément sélectionné parmi le groupe qui est constitué de données détectées dudit moyen de détermination de cap et des données dudit cercle de sortie précédent avant de passer à travers ledit champ magnétique étranger, l'azimut d'une route dans des informations cartographiques, les données du Système de Positionnement Global ("GPS") et l'azimut d'une route dans les données qui sont transmis par un poteau indicateur,

un moyen de calcul de centre de cercle de sortie (16) pour évaluer un écart de distance d'un nouveau centre dudit cercle de sortie après être passé à travers ledit champ magnétique étranger (2F) à partir du centre précédent avant de passer à travers ledit champ magnétique étranger sur la base de ladite direction dudit champ magnétique étranger et de la direction détectée par ledit moyen d'estimation d'azimut, et

un moyen de renouvellement du centre de cercle de sortie (17) pour modifier la position dudit centre précédent en nouveau centre calculé par ledit moyen de calcul du centre de cercle de sortie.

2. Dispositif de détermination d'azimut selon la revendication 1, dans lequel ledit moyen de calcul de centre de cercle de sortie (16) calcule une intersection (Cn) d'une ligne (F4) représentant l'azimut du champ magnétique étranger et une ligne représentant ladite direction supposée par ledit moyen d'estimation d'azimut.

# FIG. 1

Terrestrial magnetism sensor — 10

A/D converter — 11

Output circle calculation circuit — 12

Angular velocity sensor — 13

Foreign magnetic field sensing circuit — 15

Direction assuming circuit — 14

Output circle center calculation circuit — 16

Output circle center renewal circuit — 17

EP 0 426 091 B1

FIG. 2

FIG.3

F I G. 4

# FIG.5

```
                    ┌──────────┐
                    │  Start   │
                    └────┬─────┘
                         │              21
                  ┌──────┴───────┐
                  │ Sampling of  │
                  │ direction    │
                  │ signal       │
                  └──────┬───────┘
                         │
                        22
           ╱─────────────────────────╲
          ╱  Is variation of          ╲
         ╱   direction signal          ╲  Y
        ╱    larger than a             ╲──────→
         ╲   predetexmined value?      ╱
          ╲                           ╱
           ╲─────────────────────────╱
                      │ N      23
              ┌───────┴────────┐
              │ Calculation    │
              │ of direction   │
              └────────────────┘
```

Calculation of direction of foreign magnetic field ⎯24

Calculation of course of vehicle after passing of railroad crossing ⎯25

Calculation of center coordinates ⎯26

27  Is variation of center coordinates larger than a predetexmined value?  Y → 28 Renewal of center coordinates

N

EP 0 426 091 B1

## FIG.6(Prior Art)

```
           1                    4
    ┌──────────────┐    ┌──────────────┐
    │ Terrestrial  │    │              │
    │ magnetism    │────│              │                    6
    │ sensor       │    │              │              ┌──────────────┐
    └──────────────┘    │              │              │              │
           2            │              │──────────────│   Display    │
    ┌──────────────┐    │              │              │              │
    │ Speed sensor │────│              │              └──────────────┘
    └──────────────┘    │              │
           3            │  Data        │
    ┌──────────────┐    │  processor   │
    │   Memory     │────│              │
    └──────────────┘    └──────────────┘
```

# FIG.7 (Prior Art)

FIG.8 (Prior Art)

## FIG. 9 (Prior Art)